Europäisches Patentamt

European Patent Office

Office européen des brevets

(19)

(11) Publication number: **0 266 736**

**A2**

(12) # EUROPEAN PATENT APPLICATION

(21) Application number: **87116150.1**

(22) Date of filing: **03.11.87**

(51) Int. Cl.4: **G01N 31/00**

(30) Priority: **03.11.86 CS 7950/86**
      **18.06.87 CS 4502/87**

(43) Date of publication of application:
     **11.05.88 Bulletin 88/19**

(84) Designated Contracting States:
     **AT BE CH DE ES FR GB IT LI LU NL SE**

(71) Applicant: **Tessek sdruzeni Praha**
     **Krizovnická 3**
     **CS-110 00 Praha 1(CS)**

(72) Inventor: **Püschel, Ptr, Dipl.-Ing.**
     **Vrbova 1580**
     **Most(CS)**
     Inventor: **Formanek, Csc, Zdenêk,Dipl.-Ing.**
     **Scabinského 2637**
     **Most(CS)**
     Inventor: **Krivànek, Václav**
     **Dvirákova 212**
     **Louny-Dobromêrice(CS)**
     Inventor: **Pokorny,Antonin**
     **Nezvala 2515**
     **Most(CS)**
     Inventor: **Vlasákova, Anna, Dipl.-Ing.**
     **Komenského 519**
     **Most(CS)**
     Inventor: **Stuchliková, Alena**
     **Z. Stêpánska 2948**
     **Most(CS)**

(74) Representative: **Patentanwälte Beetz sen. -**
     **Beetz jun. Timpe - Siegfried -**
     **Schmitt-Fumian**
     **Steinsdorfstrasse 10**
     **D-8000 München 22(DE)**

(54) **Method and device for mineralization of carbonaceous materials.**

(57) The invention relates to a method and a device for the mineralization of carbonaceous materials, e.g. for subsequent dissolution and chemical analysis for determination of chemical elements in trace concentrations in foods, fodder, plant and animal tissues and other materials.

The specimen is heated to a temperature ranging from 300 to 400 °C for 6 to 20 h at atmospheric pressure in a stream of oxygen at a rate of 0,03 to 0,15 ml/s per gram of the specimen, to which a gas having a higher oxydative strength than that of oxygen is added, said gas being selected from ozone, nitrogen oxides, chlorine and mixtures thereof, such as ozone-nitrogen oxides mixtures or chloroxides of nitrogen, in an amount of 1 to 6 % by volume.

The device consists of a mineralization unit 12 formed by a heatable block 13 provided with cylindrical holes having a flat bottom for inserting the mineralization flasks 15 with the specimens, the block being covered by a lid 14 provided with openings for the necks of the mineralization flasks 15, which have cylindrical, shape conically tapering towards the cylindrical neck, inlet capillaries 16 being

loosely inserted into the openings of the mineralization flasks 15 and being at their top parts connected with a distributor 10 for the mineralization gas mixture.

The method can be also used for determining the structure of the mineral skeleton of carbonaceous materials or for careful producing ash of carbonaceous materials for technological purposes.

FIG.1.

## Method and device for mineralization of carbonaceous materials

The invention relates to a method and a device for the mineralization of carbonaceous materials e.g. for following dissolution and chemical analysis for determination of the content of chemical elements, incl. trace elements in foods, fodder, in plant and animal tissues and other materials.

The decomposition of carbonaceous materials for chemical analysis comprises the treatment of an either solid or liquid specimen in either untreated or pre-treated state, e.g. by grinding, drying or homogenization. The decomposition itself consists of two phases: The mineralization, i.e. the oxidation of carbonaceous compounds present, and the dissolution of the mineral residue, the two phases being carried out, if desired, simultaneously. The product of the decomposition is a homogeneous solution. This solution can be chemically analyzed by chemical or physico-chemical methods. The limiting factor in the determination of elements, particularly of trace elements, is their concentration in blank tests. The concentration of the analyzed can be increased or decreased depending on the treatment of the test specimen till to the end solution, particularly also due to manipulation of the specimen, use of tools, aids and chemical glassware, influence of purity and amounts of the chemicals used, as well as further objective and subjective influences effected by the workers preparing the specimen. The background established by blank tests is then used for the correction of the results of the analysis. In the analytical chemistry such methods of decomposition are advantageous that use only a small number of decomposition steps and small amounts of chemicals. Thereby the ratio of concentrations of the substance to be analyzed in the specimen and in the blank test is favorably influenced. This way it is possible to attain a more suitable limit of estimation accuracy and reproducibility of results. Then the whole analytical system, i.e. the process from taking the specimen of the respective material till to the results of the analysis possesses high reliability and accuracy, which is the main condition of success in analytical chemistry.

The known methods of mineralization of carbonaceous materials, e.g. of all sorts of foods, forages, animal and plant tissues, are using either wet or dry techniques of decomposition, or a combination thereof.

A wet decomposition of the specimen is e.g. the mineralization according to Kjeldahl (Zeitschrift für Analytische Chemie (1883) 366), where the specimen is combusted in a medium of a large excess of concentrated sulfuric acid, said acid being, in presence of a catalyst, simultaneously the oxidation agent. According to the Kahan method (Zeitschrift für Analytische Chemie 107 (1937) 11), at similar conditions, a mixture of nitric, perchloric and sulfuric acids is used. The disadvantages of this method are the high acid concentration and the presence of the catalyst in the resulting solution and the necessity of separation of an eventual insoluble residue and its dissolution by another method.

Modifications of wet methods of mineralization are often recommended by producers of analytical apparatus (cf. e.g. the print of Varian Techtron "Food analysis by atomic absorption" (1973). Such methods consist in a defined action of various combinations of acids and further chemical agents on the analyzed specimen. Thereby a leach of the specimen is obtained rather than a true solution. The substance to be determined, however, is partly but undefinably dissolved and its remainder is bound onto the solid particles contained in the leach with various strength. This fact decreases considerably the exactness of the chemical analysis.

The decomposition in a Parr bomb (cf. e.g. Püschel, "Zpravodaj VUHU/Report of the Research Institute of Brown Coal", Most, page 3 (1972), and prints of Hans Kürner company, Neuberg (1984) consists in burning the specimen in an oxygen atmosphere under pressure, flushing the bomb, separating the undissolved particles and dissolving them in acids. The shortcomings of this method are the bad solubility of the remainder, melted the sintering or melting together at high temperatures of calcination, extensive manipulation with the specimen and contamination from the metallic, though teflonized internal bomb surface. All this leads to high and varying concentrations of the analyzed substance in blank tests, whereby the accuracy of the analysis is limited: burning of the specimen in air at temperatures ranging from 500 to 850 °C, if desired in the presence of sulfuric acid (cf. Feinberg and Ducauze, "Analytical Chemistry" 52 , (1980) 207), causes losses of volatile elements such as Cd, Pb and As, and burning in an air stream with nitric acid vapors at 550 °C (cf, Gag, "The Analyst" 80 (1955) 789) was verified only for lead; moreover there may remain remnants of incompletely combusted organic matrix.

Another method of mineralization of specimens for chemical analysis is based on combustion in a low-pressure plasma discharge (cf. Gleit, C.E., and Holland, W.D., "Analytical Chemistry" 34 (1962) 1454). The combustion is carried out under a pressure of several hundred Pa at temperatures below 200 °C. The low temperature decreases the loss of the analyzed substance by volatilization, on the other hand, however, the application of a low pressure reduces this effect considerably. Further shortcomings are the necessity of rather complicated and expensive apparatus and troublesome specimen manipulation.

Further conventional methods of mineralization have been published by Cibulka et al. in the book "Pohybo olova, kadmia a rtuti v zem ě d ě lské v ý robě a biosfé ř e" (The Travel of Lead, Cadmium and Mercury in Agricultural Production and Biosphere), edited by SZN (State Agriculture Editory), Prague 1986. Thereby, a sequence of operations is used:

Carbonization of the dry substance of the specimen at 400 °C, long-time combustion at 500· °C, subsequent mineralization by concentrated nitric acid, and calcination at 500 to 550 °C. The use of comparatively high temperatures is also disadvantageous, as well as the exact manipulation of the specimen; so that contamination and partial loss of the substance might occur.

The equipment for dry mineralization heretofore used can be subdivided into three groups:

The first group comprises devices working in an open system. Such equipments allow drying of the mineralized material and following carbonization and final combustion in the presence of air, or, if desired, in an atmosphere with an increased oxygen content at atmospheric pressure and at a final temperature of 450 to 850 °C. The combustion flasks can be made e.g. from a ceramic material, from quartz or silicate glass. For the combustion, usually an electrically heated oven with regulation is used. For the drying and the carbonation phases also electric or gas heaters, heated plates or heated blocks, partly surrounding the flasks, can be used. All these equipments have the common shortcoming of being "too much open". The result is an increased possibility of contamination, which is particularly undesired in trace-and ultra-trace analysis.

On the other hand, the comparatively high temperature may cause loss of some of the analyzed elements, or agglomeration may occur at such high temperatures, or even melting of the ashes which can be dissolved, but with great difficulties.

The second group comprises devices working at an increased oxygen pressure in a closed system. A typical representative of this group is Parr's bomb with teflonized inner walls. The specimens are weight into special microthene ® bags and ignited within the bomb by metallic or graphite igniting fibers. After combustion of the specimen the mineralized matter is quantitatively flushed out from the bomb, and the solid part is separated and decomposed by acids. The solid part of the mineralized matter is usually formed by a melt which cannot be easily decomposed. A further shortcoming is the possibility of contamination by the metal of the bomb and the large number of manipulations with the specimen. Still another disadvantage resides in the long duration of the cycle caused mainly by the filtration of the mineralized matter.

The last group comprises mineralization devices working with an oxygen stream in a plasma discharge at pressures of several hundreds of kilopascals at temperatures of 150 to 200 °C. These devices are complicated in their electric and pressure parts.

It is the object of this invention to provide a method and a device for the decomposition and solubilization of carbonaceous materials wherein the shortcomings of the prior art are avoided.

The above object is achieved according to the claims.

The method according to the invention is characterized in that the specimen is heated to a temperature of 300 to 400 °C for 6 to 20 h at atmosphere pressure in a stream of oxygen at a rate of 0,03 to 0,15 ml/s per gram of the specimen and adding a gas with a higher oxidation strength than that of oxygen, said gas being selected from ozone, nitrogen oxides, chlorine and their mixtures, such as ozone/nitrogen oxides or chloroxides of nitrogen, in an amount of 1 to 6 % by volume.

The mineralization of carbonaceous materials according to the present invention takes place at temperatures by 200 to 500 °C lower than in the dry mineralization methods used up to now, so that the possibility of volatilization of the analyzed elements is reduced to a minimum. By reaction of the single components of the gaseous mixture there are formed unstable compounds such as nitrosyl peroxide or nitrosyl chloride having a higher oxidative effect than the sum of the effects of the individual starting components. Due to the high oxidative strength of the gas mixture the specimen is perfectly combusted, and the remainder does not need any subsequent oxidation. At the low temperatures used and with the controlled oxygen inlet the specimen does not light up under local overheating which would cause losses of the analyzed substance, sintering of the ashes and a decrease of their reactivity and solubility. The choice of the mixture of oxidative gases depends on the purpose for which the specimen is decomposed. Thus, if e.g. elements forming volatile chlorides, such as Ge, As, Sb, Pb and similars, are to be determined, chlorine will not be used.

The structure of the ashes corresponds to that of the originally bound substances, the ashes are in activated physical form and are easily decomposed by a small amount of mineral acids. The resulting solution has therefore a low and exactly defined concentration. The number of operations leading to the solution is small, resulting in low and constant

5      0 266 736      6

values of blank tests. The needed amounts of pure chemicals for the decomposition is minimal. The method is universal, and many kinds of various materials can be treated with only small modification of conditions. If a multiple equipment is used, it is possible to prepare a large number of specimens simultaneously.

The shortcomings mentioned above for prior art equipments for dry mineralization are avoided by the equipment for the mineralization of carbonaceous materials in dry phase by means of a gas phase according to the present invention. The device of the invention comprises a mineralization unit that is formed of a heatable block, advantageously made from an aluminum alloy, which is provided with cylindrical holes with flat bottom for inserting the mineralization flasks with the specimens. Each block is covered by a lid, advantageously also made from a aluminum alloy, which is provided with openings for the necks of the mineralization flasks. The mineralization flasks have cylindrical shape tapering conically towards the cylindrical neck. Inlet capillary tubes are loosely inserted therein, said capillary tubes being in their top parts connected to the distributor of the mineralization gas mixture. The bottom end of the inlet capillary tube can advantageously pass over into a tubular part.

The distributor of the mineralization gas mixture can be connected through a cooler, condensate separator and mixing tube with the ammonia furnace, provided with inlets for oxygen and ammonia, and with an ozonizator with oxygen inlet, where the mixture of mineralizing gases is prepared.

If chlorine is used as a component of the mineralizing gas mixture, the distributor of the gas mixture is provided with an inlet for chlorine.

The distributor of the mineralizing gas mixture can be directly connected, however, to containers or sources of single gases as needed.

The block of the mineralization unit as well as the ammonia burning furnace and the ozonizator can be connected to a source of electric energy.

The mixing tube, the condensate separator, the cooler, the distributor of the gas mixture, the chlorine inlet, the mineralization furnace, the inlet capillary tubes and their connecting elements are made from an oxidation resistant material.

The device for the mineralization of carbonaceous materials according to the invention allows to treat the specimen in a solid phase by a gas phase under predetermined conditions. The solid phase of the specimen can be obtained, if desired, in the mineralization device of the invention by drying, degasification and evaporation of semi-solid or liquid specimens. The reacting gas phase makes possible a controlled burning, where the oxidizing agents are components of the gas phase, such as oxygen, ozone and nitrogen oxides. The advantage of the device according to the invention is the controlled combustion shifting the reaction equilibrium towards the desired mineralization products by constant addition of fresh gas mixture while simultaneously discharging the gaseous decomposition products. Thereby a perfect mineralization product can be obtained, the microstructure and texture thereof being only slightly impaired in comparison with those of the original specimen which is very favorable for the following dissolution of the ashes. The device according to the present invention allows to control, according to a heating - schedule or program, the drying, degassing and, in the last phase, the mineralization in such a way that the whole mineralization flask is evenly heated, and any formation of unburnt sediments in the neck of the flask and any overheating of the mineralized material are avoided.

Any loss of the determined elements is practically excluded due to the low mineralization temperature. The half-closed mineralization device reduces the possibility of contamination of the specimen by impurities from the environment to a minimum.

The annexed drawings show an example of the device for the mineralization of carbonaceous materials according to the invention whereby

Fig. 1 shows a general flow sheet of the device comprising the mineralization unit, and

Fig. 2 shows the mineralization unit with more details.

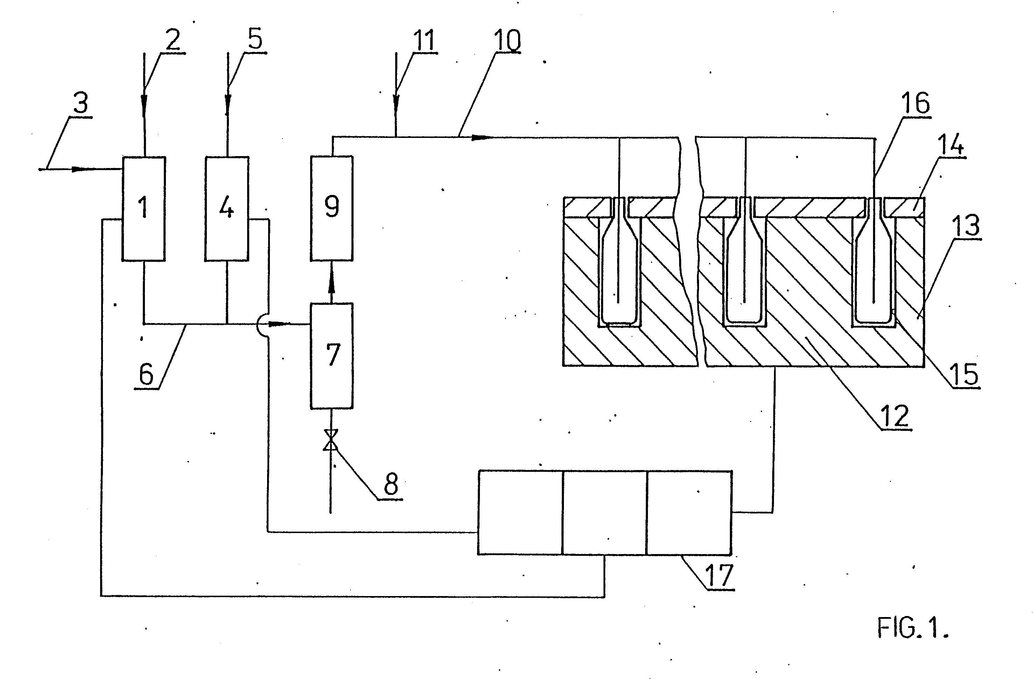

The device for mineralization of carbonaceous materials shown in Fig. 1 comprises an ammonia combustion furnace 1 provided with an oxygen inlet 2 and an ammonia inlet 3, and an ozonizator 4 provided with an oxygen inlet 5. The ammonia combusting furnace 1 and the ozonizator 4 are connected by a mixing tube 6 with a condensate separator 7 provided with an outlet 8, into which there are led the reaction products of the ammonia combusting furnace 1, i.e. a mixture of oxygen, water vapor and nitrogen oxides, and the reaction products from the ozonizator 4, i.e. an oxygen-ozone mixture. The condensate separator 7 is connected with a cooler 9, which is connected by the distributor 10 of the gas mixture to the mineralization unit 12. If chlorine is added to the mixture of mineralization gases, the distributor 10 of the gas mixture is provided with an inlet 11 for chlorine.

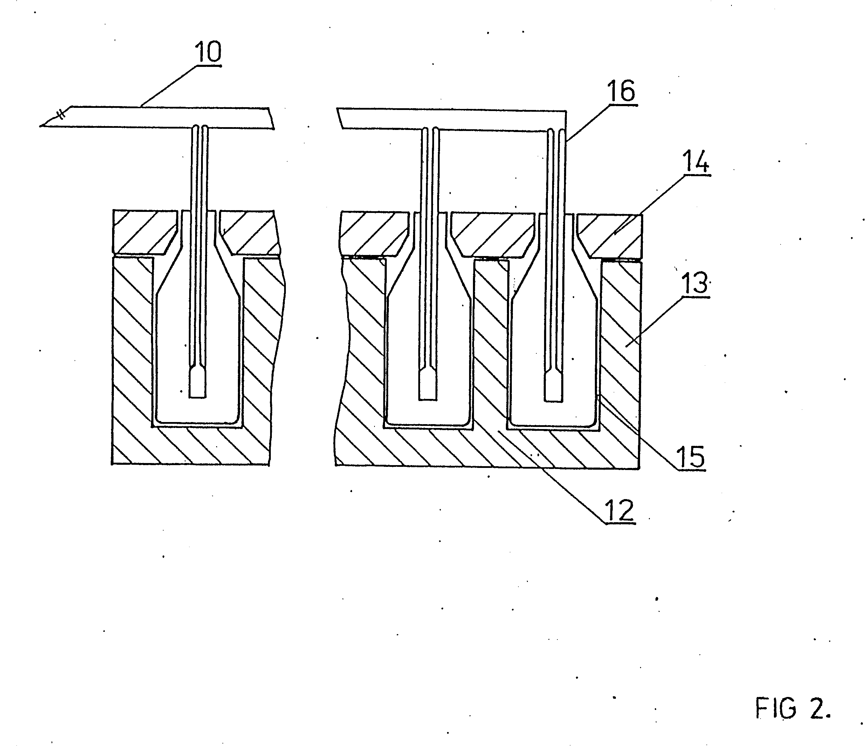

The mineralization unit 12, as may also be seen from Fig. 2 consists of a block 13 of e.g. cylindrical or prismatic shape, made of a aluminum alloy and electrically heated and provided with cylindrical holes with flat bottom for inserting the mineralization flasks 15. The specimens are inserted into these mineralization flasks. The block 13 is covered by a lid 14 also made from an

5

aluminum alloy and being provided with openings for the necks of the mineralization flasks 15. The flasks 15 are cylindrically shaped, tapering conically towards the cylindrical neck. Inlet capillary tubes 16, that are with their top parts connected with the distributor 10 of the gas mixture, are loosely inserted into the mineralization flasks 15. The lower ends of the capillary tubes 16 pass over into a tubular part.

To avoid undesired corrosion by the streaming mineralization gases, the mixing tube 6, the separator 7 of the condensate, the cooler 9, the distributor 10 of the gas mixture, the inlet 11 for chlorine, the mineralization flasks 15 and the inlet capillary tubes 16 as well as their connection elements are made from a corrosion-resistant material, e.g. from quartz glass or polytetrafluoroethylene.

The device as shown in the drawings further comprises an electric energy source 17 which is connected with the ammonia burning furnace 1 and the ozonizator 4 for preparation of the mineralization gas mixture and with the block 13 for - scheduled or programmed heating.

The mineralization gas mixture for the mineralization of carbonaceous materials is in this case prepared as follows:

In the combustion furnace 1 a mixture of ammonia and oxygen is burnt on a catalyst with formation of nitrogen oxides; another stream of oxygen is enriched by ozone in the ozonizator 4. The gases are then led together into the condensate separator 7, where the reaction water and nitric acid are separated. By the reaction of nitrogen oxides, excessive oxygen and ozone, higher nitrogen oxides and peroxo-compounds are formed. After complete separation of water from the gas mixture and, if desired, addition of chlorine to the mineralization gas mixture the gas stream is led via the distributor 10 of the gas mixture into the inlet capillary tubes 16 to the specimens to be mineralized. The specimens are placed in mineralization flasks 15 that are in their whole volume uniformly heated, according to a program, in the block 13.

The mineralization itself is carried out such that the weighted specimens are heated according to an optimized program depending on the kind of material to be mineralized. An effective action of the mineralization gas mixture is made possible by leading it into the space of the specimen, where a constant exchange of the meta-stable, strongly oxidative reacted compounds by fresh ones takes place. The reaction products are entrained by the stream of the non-reacted gas over the lid 14 of the mineralization unit 12, whereby a shift of the reaction equilibrium towards the mineralization products is obtained, the stream of escaping gases preventing penetration of undesired impurities into the mineralization flasks 15.

In the following, the invention will be explained by way of examples.

## Example 1

A 2 g specimen of dry animal muscle was heated 20 h to 400 °C in an oxygen stream having a rate of 0,06 ml/s, the oxygen containing 5 % of nitrogen oxides.

## Example 2

A 2 g specimen of grain flour was heated 18 h to 400 °C in a stream of oxygen containing 5 % of nitrogen oxides and 1 % of ozone. The gas mixture was streaming at a rate of 0,2 ml/s.

## Example 3

A 0,6 g specimen of cotton was heated for 6 h to 300 °C in a stream of oxygen, at a rate of 0,09 ml/s containing 5 % of ozone.

## Example 4

A 1 g specimen of grain straw was heated for 12 h to 380 °C in a stream of oxygen containing 1 % of nitrogen oxides and 5 % of ozone, at a rate of 0,1 ml/s.

## Example 5

A 2 g specimen of a mineral oil was heated for 20 h to 300 °C in a stream of oxygen containing 1 % of nitrogen oxides and 5 % of chlorine, at a rate of 0,1 ml/s.

## Example 6

A 1 g specimen of butter was heated for 15 h to 350 °C in a stream of oxygen containing 5 % of nitrogen oxides and 1 % of chlorine, at a rate of 0,65 ml/s.

In all examples the product of the mineralization was a fluffy ash easily soluble in 15 % nitric acid. The ash of the grain straw and that of the flour were wetted before dissolution with hydrofluoric and perchloric acids, whereafter the acids were boiled off.

The method of mineralization of carbonaceous materials of the present invention can also be utilized for determining the structure of the mineral skeleton of carbonaceous materials or for the careful production of ashes of carbonaceous materials for technological processes.

## Claims

1. A method of mineralization of carbonaceous materials, characterized in that the specimen is heated 6 to 20 h to a temperature ranging from 300 to 400 °C at atmospheric pressure in a stream of oxygen at a rate of 0,03 to 0, 15 ml/s per gram of specimen, whereby a gas possessing a higher oxidative strength than that of oxygen, which is selected from ozone, nitrogen oxides, chlorine and mixtures thereof, is added to the oxygen in an amount of 1 to 6 % by volume.

2. The method according to claim 1, characterized in that a mixture of ozone, nitrogen oxides and chloroxides of nitrogen is added to the oxygen stream.

3. A device for performing the method of claims 1 and 2, characterized by a mineralization unit (12) formed by a heatable block (13), which is provided with cylindrical holes with flat bottom for inserting mineralization flasks (15) with the specimens, the block (13) being covered by a lid (14) provided with openings for the necks of the mineralization flasks (15), which have cylindrical shape conically tapering towards the cylindrical neck and containing loosely inserted inlet capillaries (16) connected at their top parts with a distributor (10) of the mineralization gas mixture.

4. The device according to claim 3, characterized in that the distributor (10) of the mineralization gas mixture is connected through a cooler (9), a condensate separators (7), and a mixing tube (6) with an ammonia combustion furnace (1) provided with an oxygen inlet (2) and an ammonia inlet (3), and with the ozonizator (4) provided with an oxygen inlet (5).

5. The device according to claim 3 or 4, characterized in that the bottom end of the inlet capillaries (16) pass over into a tubular part.

6. The device according to one of claims 3 to 5, characterized in that the block (13) of the mineralization unit (12) is connected with an electric energy source (17).

7. The device according to claim 6, characterized in that the electric energy source (17) is connected with the ammonia combustion furnace (1) and with the ozonizator (4).

8. The device according to one of claims 3 to 7, characterized in that the mixing tube (6), the condensate separator (7), the cooler (9), the distributor (10) of the mineralization gas mixture, the mineralization flasks (15) and the inlet capillaries (16) as well as their connecting elements are made from an oxidation-resistant material.

FIG. 1.

0 266 736

FIG 2.

0 266 736